# EUROPÄISCHE PATENTSCHRIFT

(11) **EP 0 872 184 B1**
(45) Veröffentlichungstag und Bekanntmachung des Hinweises auf die Patenterteilung: **18.12.2002**
(21) Anmeldenummer: 98200664.5
(22) Anmeldetag: 05.03.1998
(51) Int. Cl.: A22C 11/12

(54) **Verfahren und Vorrichtung zum Herstellen von Würsten**
Method and device for manufacturing sausages
Procédé et dispositif pour la fabrication de saucisses

(30) Priorität: 15.04.1997 DE 19715598
(43) Veröffentlichungstag der Anmeldung: 21.10.1998
(73) Patentinhaber: Poly-clip System GmbH & Co. KG, 60489 Frankfurt am Main (DE)
(72) Erfinder: Töpfer, Klaus, 64572 Büttelborn (DE)
(74) Vertreter: Fischer, Ernst, Dr.

(56) Entgegenhaltungen:
- EP-A- 0 048 507
- EP-A- 0 093 037
- DE-A- 2 004 477
- DE-A- 2 803 511
- US-A- 5 109 648

## Beschreibung

Die Erfindung betrifft ein Verfahren zur Herstellung von Würsten, deren beide Enden jeweils durch einen von einem Fadenvorrat abgezogenen Faden verbunden sind, bei dem der Faden zunächst an einem ersten verschlossenen Wurstende befestigt, danach eine erste bestimmte Fadenlänge freigegeben und die Wurst befüllt und anschließend das zweite Wurstende zusammen mit dem Faden von zwei Verdrängerscherenpaaren gegriffen und eingeschnürt wird und sodann die beiden Verdrängerscherenpaare gespreizt werden, so daß ein füllgutfreier Zopf entsteht, in dem die Wurst schließlich verschlossen wird. Die Erfindung betrifft weiterhin einen Fadenspender für eine Vorrichtung zum Herstellen von Würsten, deren beide Enden jeweils durch einen Faden miteinander verbunden sind.

Die Erfindung bezieht sich insbesondere auf die Herstellung von Kranzdarmwürsten. Bei diesen Würsten sind die beiden verschlossenen Wurstenden durch einen Faden miteinander verbunden, so daß die Wurst schließlich hufeisenförmig gekrümmt ist. Zum Herstellen einer solchen Wurst wird eine Wursthülle zunächst an einem ersten Ende verschlossen. An diesem ersten Ende wird der Faden befestigt. Die Wursthülle ist so auf ein Füllrohr aufgezogen, daß sich das erste geschlossene Ende der Wursthülle vor der Öffnung des Füllrohres befindet. Durch das Füllrohr wird Füllgut in die Wursthülle gepreßt. Während dieses Befüllens wird ständig Hüllenmaterial von einem Vorrat auf der Außenseite des Füllrohres abgezogen, so daß der vor der Füllrohröffnung befindliche, bereits befüllte Wurstabschnitt immer länger wird. Gleichzeitig krümmt sich dieser Wurstabschnitt, weil das erste verschlossene Ende dieses Wurstabschnitts von dem daran befestigten Faden zurückgehalten wird.

Wenn die Wurst schließlich auf das gewünschte Maß befüllt ist, greifen zwei Verdrängerscherenpaare die Wursthülle und den Faden. Durch Schließen der Verdrängerscherenpaare wird die Wursthülle so weit eingeschnürt, daß sich praktisch kein Füllgut mehr in dem eingeschnürten Wursthüllenabschnitt befindet. Anschließend werden die Verdrängerscherenpaare gespreizt, d.h. das füllrohrferne Verdrängerscherenpaar wird vom füllrohrnahen Verdrängerscherenpaar weg bewegt und zieht dabei weiteres Wursthüllenmaterial durch das füllrohrnahe Verdrängerscherenpaar nach. Auf diese Weise entsteht ein füllgutfreier Hüllenzopf zwischen den beiden Verdrängerscheren. Dieser füllgutfreie Hüllenzopf wird schließlich durch Setzen zweier Verschlußclips dauerhaft verschlossen. Die Verschlußclips umgreifen dabei nicht nur den Hüllenzopf, sondern auch den unmittelbar benachbarten Faden, so daß letzterer durch die Verschlußclips an der Wursthülle befestigt ist.

Abschließend werden der Hüllenzopf und der Faden zwischen den beiden Verschlußklammern durchtrennt. Auf diese Weise entsteht das zweite geschlossene Ende der soeben befüllten Wurst sowie das erste geschlossene Ende der nächsten zu befüllenden Wurst. An letzterem ist der Faden dann bereits befestigt. Die auf diese Weise hergestellte Wurst hat die eingangs beschriebene gekrümmte Form mit zwei durch den Faden verbundenen Wurstenden.

Ein Verfahren und eine Vorrichtung zum Herstellen solcher Würste ist beispielsweise aus der europäischen Patentschrift 0 048 507 bekannt. Aus dieser Druckschrift geht insbesondere hervor, daß für jede Wurst zu Beginn des Befüllens oder kurz davor eine bestimmte Fadenlänge maschinell vorgegeben wird, so daß die Enden der gekrümmten Wurst immer den gleichen, durch die Fadenlänge bestimmten Abstand voneinander haben.

Es hat sich herausgestellt, daß der Faden bei den beschriebenen Verfahren hin und wieder aus dem verschlossenen Clip herausgezogen wird, so daß er nicht mehr an dem entsprechenden Wurstende befestigt ist. Außerdem kommt es häufiger zu Verletzungen der Wursthülle. Beides führt zu einem höheren Ausschuß bei der Wurstproduktion.

Der Erfindung liegt die Aufgabe zugrunde, eine Alternative zum bekannten Stand der Technik zu schaffen, mit der der Ausschuß bei der Wurstproduktion verringert werden kann.

Die Lösung dieser Aufgabe besteht in einem Verfahren der eingangs genannten Art, bei dem nach dem Einschnüren und vor dem Spreizen der beiden Verdrängerscherenpaare eine zweite bestimmte Fadenlänge freigegeben wird.

Der Erfindung liegt die Erkenntnis zugrunde, daß der Faden bei den bekannten Vorrichtungen während des Spreizens der beiden Verdrängerscherenpaare nicht wie die Wursthülle nachgezogen, sondern festgehalten wird, um die definiert vorgegebene Fadenlänge nicht zu vergrößern. Dadurch, daß zwar die Wursthülle, nicht aber der Faden nachgezogen wird, reiben beide aneinander, was zu Verletzungen der Wursthülle führen kann. Durch das erfindungsgemäße Freigeben einerzweiten Fadenlänge kann solch eine reibungsverursachende Relativbewegung zwischen Faden und Wursthülle vermieden werden.

Bevorzugt wird.ein Verfahren, bei dem die zweite Fadenlänge annähernd dem Maß entspricht, um das die Verdrängerscherenpaare gespreizt werden.

Eine vorteilhafte Ausgestaltung des Verfahrens besteht darin, daß zunächst eine Überlänge des Fadens von einem Fadenspeicher vorgegeben wird, welche dann nach dem Befüllen und vor dem Einschnüren von dem Fadenspender auf die erste gewünschte Fadenlänge verkürzt wird.

Ein derartiges Verfahren hat den Vorteil, daß die Wursthülle zunächst ohne starke Umlenkung gefüllt werden kann, weil das erste verschlossene Ende der Wurst aufgrund der Überlänge des Fadens beim Befüllen nicht-so stark zurückgehalten wird. Erst nach dem Befüllen wird der Faden so weit zurückgezogen, daß sich die gewünschte erste Fadenlänge einstellt, die schließlich den Abstand der beiden Wurstenden bestimmt.

Die Lösung der genannten Aufgabe besteht erfindungsgemäß auch in einem Fadenspender der eingangs genannten Art, der zwei getrennt ansteuerbare Freigabeeinrichtungen für jeweils eine einstellbare Fadenlänge aufweist.

Mit Hilfe eines solchen Fadenspenders ist es möglich, die zur Durchführung des erfindungsgemäßen Verfahrens benötigte erste und zweite Fadenlänge definiert vorzugeben und jeweils freizugeben. Damit trägt ein solcher Fadenspender wie auch das Verfahren dazu bei, daß insbesondere bei der Produktion von Kranzdarmwürsten weniger Ausschuß anfällt, weil beispielsweise die Wursthülle beim Spreizen der Verdrängerscherenpaare nicht beschädigt wird.

Bevorzugt wird ein Fadenspender, bei dem die Freigabeeinrichtungen über eine Freilaufkupplung auf einen Fadenförderer wirken. Dieser Fadenförderer weist vorzugsweise zwei Zahnräder auf, zwischen denen der Faden geführt ist. Eines von diesen Zahnrädern ist vorzugsweise mit der Freilaufkupplung verbunden. Ein Fadenförderer mit den bevorzugten Merkmalen weist den wesentlichen Vorteil auf, daß er zwar zwei getrennt ansteuerbare Freigabeeinrichtungen besitzt, denen jeweils unabhängig voneinander eine bestimmte Fadenlänge vorgegeben werden kann, die aber auf einen gemeinsamen Fadenförderer wirken, so daß dieser nur einmal vorgesehen werden muß.

Weiterhin wird ein Fadenspender bevorzugt, bei dem die Freigabeeinrichtungen jeweils einen Linearantrieb mit einstellbarem Hub aufweisen. Diese Linearantriebe weisen vorzugsweise jeweils einen Pneumatikzylinder mit Kolben und Kolbenstange mit einstellbarer mechanischer Hubbegrenzung auf. Die mechanische Hubbegrenzung weist dabei vorzugsweise eine verstellbare Schraube auf, die koaxial zur jeweiligen Kolbenstange so angeordnet ist, daß sie den Weg der Kolbenstange begrenzen kann. Die bevorzugten Merkmale ergeben einen Fadenspender, der sowohl einfach herzustellen als auch leicht ansteuer- und einstellbar ist.

Der Fadenspender ist vorzugsweise so ausgeführt, daß er eine Gabeltraverse aufweist, die zwischen ihren beiden Gabelöffnungen drehbar gelagert ist und mit beiden Linearantrieben über Gleitsteine in den Gabelöffnungen verbunden ist. Die Gabeltraverse ist dabei vorzugsweise über die Freilaufkupplung mit einem der beiden Zahnräder verbunden. Mit der Kombination aus zwei Linearantrieben, einer Gabeltraverse und der Freilaufkupplung läßt sich auf einfache Weise der konzeptionelle Vorteil des Fadenspenders verwirklichen, daß zwei unabhängige Freigabeeinrichtungen auf einen Fadenförderer wirken.

Als Alternative zu Gleitsteinen und Gabeltraverse für die Kopplung der Linearantriebe an den drehbaren Freilauf können auch ein Zahnrad und als Zahnstangen ausgebildete Kolbenstangen dienen, die in das Zahnrad eingreifen.

Ein bevorzugter Fadenspender weist eine Fadenrückzieheinrichtung auf. Die Fadenrückzieheinrichtung weist vorzugsweise eine Kufe auf, die mittels eines Antriebs zwischen zwei Positionen hin- und herbewegbar ist. Der Antrieb ist dabei vorzugsweise ein pneumatischer Linearantrieb. Durch die bevorzugte Ausstattung des Fadenspenders mit einer Fadenrückzieheinrichtung kann auch die bevorzugte Verfahrensvariante verwirklicht werden, der gemäß zunächst eine Überlänge des Fadens von einem Fadenspender vorgegeben wird, welche dann nach dem Befüllen und vor dem Einschnüren von dem Fadenspender auf die erste gewünschte Fadenlänge verkürzt wird.

Die Erfindung soll nun anhand eines Ausführungsbeispiels mit Hilfe der Zeichnungen erläutert werden. Von den Figuren der Zeichnung zeigen:
- Fig. 1: einen Fadenspender mit einer Fadenrückzieheinrichtung;
- Fig. 2: eine Ansicht einer fertigen, auf einen Rauchspieß aufgehängten Kranzwurst;
- Fig. 3 bis 5: verschiedene Verfahrensschritte zur Herstellung einer Kranzwurst sowie die an dem Verfahren beteiligten Vorrichtungen.

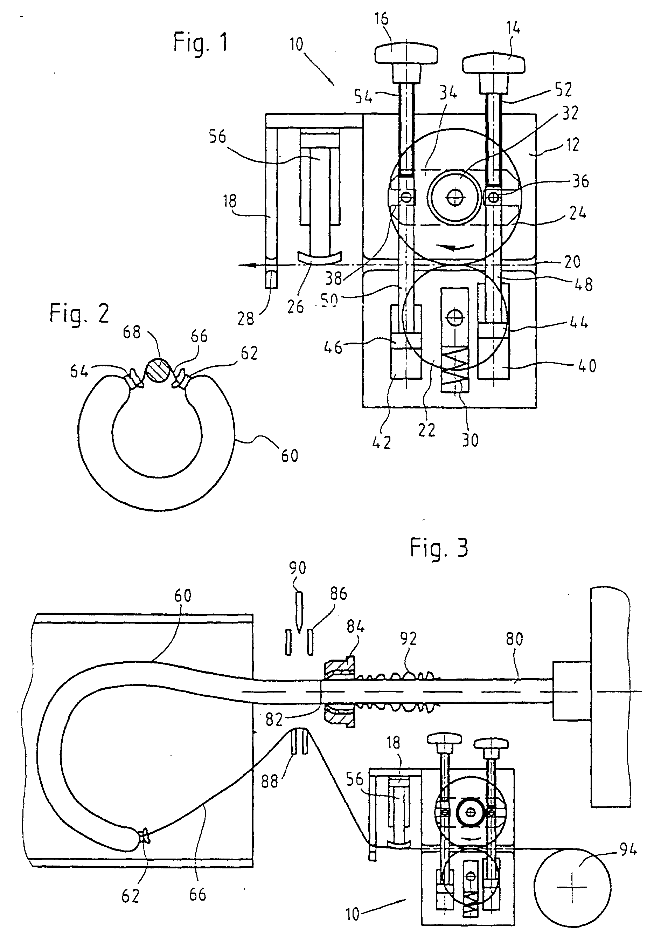

Der Fadenspender 10 aus Fig. 1 besteht im wesentlichen aus drei Baugruppen: Einem Fadenförderer 12, zwei auf diesen wirkende Freigabeeinrichtungen 14 und 16 sowie eine Rückzieheinrichtung 18. Ein Faden 20 wird zwischen zwei Zahnrädern 22 und 24 des Fadenförderers 12 hindurch an einer Kufe 26 der Rückzieheinrichtung 18 vorbei durch ein Führungsauge 28 geführt. Zunächst sollen der Fadenförderer 12 sowie die Freigabeeinrichtungen 14 und 16 und deren Zusammenwirken beschrieben werden. Von den zwei Zahnrädern 22 und 24 des Fadenförderers 12 ist eines (22) federnd gelagert und wird von einer Druckfeder 30 gegen das andere Zahnrad 24 gedrückt, so daß sich der Abstand der beiden Zahnräder unterschiedlichen Fadendicken anpassen kann. Das Zahnrad 24 wird über einen Freilauf 32, eine Gabeltraverse 34 sowie über zwei Gleitsteine 36 und 38 von den beiden Freigabeeinrichtungen 14 und 16 angetrieben.

Jede der beiden Freigabeeinrichtungen 14 und 16 weist je einen Pneumatikzylinder 40 und 42 auf, in dem jeweils ein Kolben 44 und 46 durch Preßluft hin- und herbewegbar ist. An den beiden Kolben 44 und 46 ist jeweils eine Kolbenstange 48 und 50 befestigt, welche über je einen Gleitstein 36 und 38 in den beiden Gabelöffnungen der Gabeltraverse 34 mit dieser verbunden sind. Die Gabeltraverse 34 ist zwischen ihren beiden Gabelöffnungen drehbar gelagert. Die lineare Hubbewegung der Freigabeeinrichtungen 14 und 16 wird auf diese Weise in eine Drehbewegung umgesetzt. Die Drehbewegung der Gabeltraverse 34 wechselt je nach Hubrichtung der Freigabeeinrichtungen. Bei einer Drehung in einer Richtung nimmt die Gabeltraverse 34 das Zahnrad 24 über den Freilauf 32 mit. Dies ist in der Zeichnung durch einen Pfeil angedeutet. Dreht sich die Gabeltraverse 34 dagegen in die andere Richtung, steht das Zahnrad 24 aufgrund des Freilaufes 32 still. Wie weit sich die Gabeltraverse 34 dreht, hängt von der Größe des jeweiligen Kolbenhubs ab. Um diesen für jede der beiden Freigabeeinrichtungen 14 und 16 getrennt einstellen zu können, kann der Weg der beiden Kolbenstangen 48 und 50 durch jeweils eine Schraube 52 und 54 begrenzt werden. Die beiden Schrauben 52 und 54 sind koaxial zu den beiden Kolbenstangen 48 und 50 angeordnet. Sie begrenzen den Weg der beiden Kolbenstangen 48 und 50, indem ihre Stirnflächen als Anschlag dienen. Die Position des jeweiligen Anschlags und damit der Hub der Kolbenstangen 48 und 50 kann durch Hinein- oder Herausdrehen der beiden Schrauben 52 und 54 für jede Freigabeeinrichtung 14 und 16 getrennt eingestellt werden. Eine Veränderung des jeweiligen Kolbenhubs führt bei der Gabeltraverse 34 zu einer Veränderung des Drehwinkels pro Kolbenhub und damit zu einer Veränderung der mit einem Kolbenhub geförderten Fadenlänge.

Die Rückzieheinrichtung 18 umfaßt einen Pneumatikzylinder 56, mit dem die Kufe 26 zwischen zwei Positionen hin- und herbewegt werden kann. Nachfolgend soll nun die Herstellung von Kranzdarmwürsten der in Fig. 2 abgebildeten Art beschrieben werden. Die Wurst in Fig. 2 besteht aus einer mit Füllgut befüllten schlauchartigen Hülle 60, die an ihren beiden Enden mit jeweils einem Clip 62 und 64 verschlossen ist. Mit Hilfe der beiden Clips 62 und 64 ist ein Faden 66 an den beiden Wurstenden befestigt. Die Länge des Fadens 66 ist so bemessen, daß die beiden Wurstenden den Rauchspieß 68 nicht berühren. Dieser Faden 66 hält die beiden Wurstenden nahe beieinander und dient unter anderem dazu, die Wurst an einem - in Fig. 2 im Querschnitt dargestellten - Rauchspieß 68 aufzuhängen.

In den Fig. 3 bis 5, die der Erläuterung des Verfahrens dienen sollen, sind neben dem bereits beschriebenen Fadenspender 10 auch die für das Verfahren wesentlichen Bestandteile einer Füllmaschine abgebildet. Diese Bestandteile sind ein Füllrohr 80 mit einer Mündungsöffnung 82 sowie einer um das Füllrohr 80 herum in der Nähe der Mündungsöffnung 82 angeordneten Darmbremse 84. Vor der Mündungsöffnung 82 befinden sich ein erstes (86) und ein zweites Verdrängerscherenpaar (88) sowie ein Trennmesser 90.

Auf die Außenfläche des Füllrohres 80 ist die Wursthülle 60 aufgezogen, und zwar dergestalt, daß sich ein vorderes verschlossenes Ende der Wursthülle 60 vor der Mündungsöffnung 82 befindet, die Wursthülle zwischen der Außenfläche des Füllrohres 80 und der Darmbremse 84 hindurchgeführt ist und auf der Außenfläche des Füllrohres 80 hinter der Darmbremse 84 einen Vorrat 92 bildet. Die den Vorrat 92 bildende Hülle ist - wie in der Zeichnung angedeutet - ziehharmonikaartig gestaucht. Am vorderen verschlossenen Ende der Hülle 60 ist der Faden 66 befestigt. Dieser ist zu Beginn der Herstellung einer Kranzdarmwurst noch mit einem Fadenvorrat auf einer Garnrolle 94 verbunden und von dort in der bereits beschriebenen Weise durch den Fadenspender 10 geführt sowie durch die beiden geöffneten Verdrängerscherenpaare 86 und 88.

Das Befüllen einer Wurst beginnt damit, daß Füllgut durch das Füllrohr 80 in die Wursthülle 60 gepreßt wird. Da deren vorderes Ende mit einem Clip 62 verschlossen ist, füllt sich die Wursthülle und zieht gleichzeitig weiteres Hüllenmaterial aus dem Vorrat 92 ab. Beim Abziehen des Hüllenmaterials wird dieses von der Darmbremse 84 definiert gebremst, um so den gewünschten Fülldruck in der Wursthülle einzustellen. Die vom Fülldruck bewirkte Kraft zum Abziehen des Hüllenmaterials aus dem Vorrat 92 sowie die dem entgegenstehende Bremskraft der Darmbremse 84 stehen im Gleichgewicht zueinander.

Durch den am vorderen verschlossenen Hüllenende mit Hilfe des Clips 62 befestigten Faden 66 wird dieses Hüllenende ab einer bestimmten Füllmenge zurückgehalten, so daß die Wursthülle 60 von diesem Zeitpunkt an umgelenkt wird. Bei welchem Füllgrad es zu dieser Umlenkung kommt und wie stark die Wursthülle umgelenkt wird, hängt dabei von der Länge des Fadens 66 ab, die von dem Fadenspender 10 freigegeben wurde. Bei der bevorzugten Verfahrensvariante wird zunächst eine Überlänge des Fadens 66 vorgegeben, um eine allzu starke Umlenkung zu vermeiden. Die Überlänge des Fadens beträgt dabei beispielsweise das dreifache derjenigen Fadenlänge, die schließlich gewünscht ist.

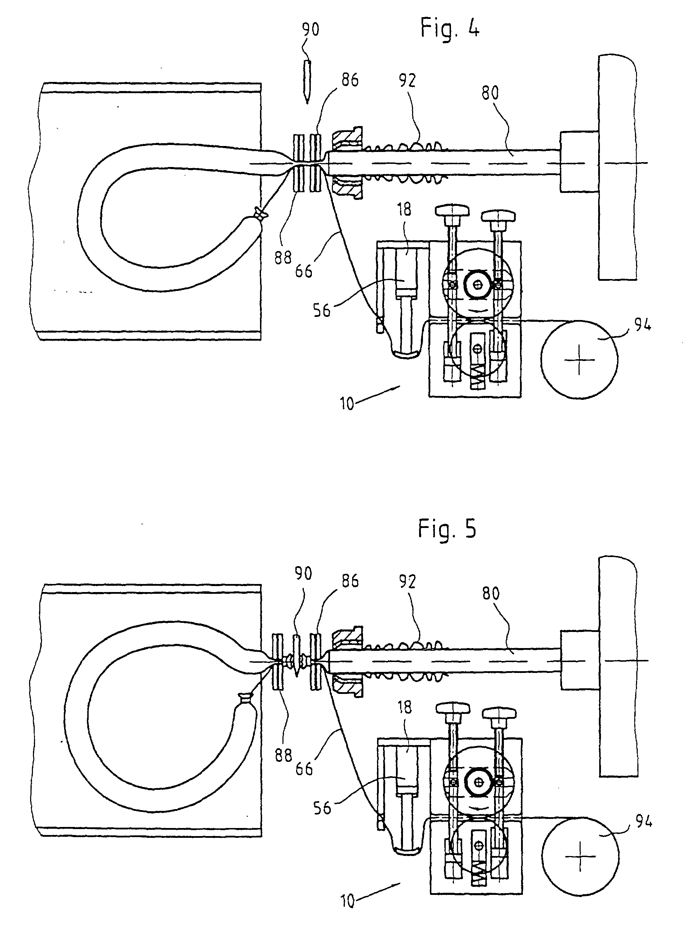

Sobald die Wurst auf das gewünschte Maß befüllt ist, also der Füllvorgang für diese Wurst abgeschlossen ist, wird die Länge des Fadens 66 auf das gewünschte Maß reduziert. Dies geschieht mit Hilfe der Rückzieheinrichtung 18 des Fadenspenders 10, indem der Pneumatikzylinder 56 der Rückzieheinrichtung 18 in die ausgefahrene Position getrieben wird, und dabei den an der Kufe 26 vorbeigeführten Faden zurückzieht. In Fig. 3 ist die Rückzieheinrichtung 18 noch in der eingefahrenen Position dargestellt, so daß eine Überlänge des Fadens 66 für das Befüllen vorliegt, während die Rückzieheinrichtung 18 in Fig. 4 und 5 ausgefahren ist, so daß dort die Länge des Fadens 66 auf das gewünschte Maß reduziert ist.

Nach dem Zurückziehen des Fadens 66 greifen die beiden Verdrängerscherenpaare 86 und 88 zu und schnüren auf diese Weise die Wursthülle 60 ab. An der Einschnürstelle wird dabei das Füllgut aus der Wursthülle 60 verdrängt. Dieser Zustand ist in Fig. 4 abgebildet.

Anschließend werden die beiden Verdrängerscherenpaare 86 und 88 gespreizt, indem das zweite Verdrängerscherenpaar in Füllrohrlängsrichtung vom ersten Verdrängerscherenpaar 86 wegbewegt wird. Dabei zieht das zweite Verdrängerscherenpaar 88 weiteres Hüllenmaterial durch das erste Verdrängerscherenpaar 86 hindurch aus dem Vorrat 92 ab. Außerdem wird für diesen Vorgang von dem Fadenspender 10 eine zweite Fadenlänge freigegeben, so daß das zweite Verdrängerscherenpaar beim Spreizen nicht nur Hüllenmaterial, sondern auch Faden durch das erste Verdrängerscherenpaar hindurch nachziehen kann. Faden und Hüllenmaterial bewegen sich dabei mit gleicher Geschwindigkeit, so daß möglicherweise die Hülle schädigende Relativbewegungen zwischen Faden und Hülle praktisch ausgeschlossen sind.

Nach dem Spreizen der Verdrängerscherenpaare wird der zwischen den beiden Verdrängerscherenpaaren befindliche füllgutfreie Hüllenzopf mittels zweier Verschlußclips verschlossen. Dabei wird jeweils auch der Faden 66 von den Verschlußclips erfaßt und auf diese Weise an der verschlossenen Wursthülle 60 befestigt. Schließlich werden die Wursthülle 60 und der Faden 66 mit Hilfe des Trennmessers 90 zwischen den beiden Verschlußclips durchtrennt. Damit ist die Herstellung einer Kranzdarmwurst abgeschlossen.

Die erste Überlänge des Fadens 66 sowie die zweite, beim Spreizen der Verdrängerscherenpaare benötigte Fadenlänge werden jeweils von dem Fadenspender 10 vorgegeben, und zwar einmal von der ersten Freigabeeinrichtung 14 und zum anderen von der zweiten Freigabeeinrichtung 16. Diese können über Pneumatikventile getrennt voneinander angesteuert werden. Der Hub der jeweiligen Freigabeeinrichtung 14 oder 16 bestimmt dabei die freigegebene Fadenlänge. Beim Rückhub der entsprechenden Freigabeeinrichtung wird aufgrund des Freilaufes 32 zwischen der Gabeltraverse 34 und dem Zahnrad 24 kein Faden transportiert. Zum Fadentransport arbeitet die Freigabeeinrichtung 14 in drückender Richtung, während die Freigabeeinrichtung 16 in ziehender Richtung arbeitet. Entsprechend ist der Rückhub der Freigabeeinrichtung 14 ziehend und der der Freigabeeinrichtung 16 drükkend. Die Größe des jeweiligen Hubs ist dabei - wie bereits beschrieben - mit Hilfe der beiden Schrauben 52 und 54 einstellbar. Die Ansteuerung der beiden Freigabeeinrichtungen 15 und 16 erfolgt über pneumatische Ventile in Abhängigkeit einer Verschließeinrichtung, zu der die Verdrängerscherenpaare 86 und 88 gehören. Entsprechend wird auch die Rückzieheinrichtung 18 pneumatisch angesteuert.

Um Schlupf beim Fadentransport zu vermeiden, sind die beiden Zahnräder 22 und 24 auf ihrer Umfangsfläche verzahnt, so daß der Faden 66 beim Fadentransport von der Verzahnung der beiden Zahnräder 22 und 24 erfaßt wird.

## Patentansprüche

1. Verfahren zur Herstellung von Würsten, deren beide Enden jeweils durch einen von einem Fadenvorrat abgezogenen Faden miteinander verbunden sind, bei dem
- der Faden (66) zunächst an einem ersten verschlossenen Wurstende befestigt,
- danach eine erste bestimmte Fadenlänge freigegeben und die Wurst befüllt,
- anschließend das zweite Wurstende zusammen mit dem Faden (66) von zwei Verdrängerscherenpaaren (86, 88) gegriffen und eingeschnürt wird und
- sodann die beiden Verdrängerscherenpaare (86, 88) gespreizt werden, so daß ein füllgutfreier Zopfabschnitt entsteht, in dem die Wurst schließlich verschlossen wird,
**dadurch gekennzeichnet, daß** nach dem Einschnüren und vor dem Spreizen der beiden Verdrängerscherenpaare (86, 88) eine zweite bestimmte Fadenlänge freigegeben wird.

2. Verfahren nach Anspruch 1, **dadurch gekennzeichnet, daß** die zweite Fadenlänge annähernd dem Maß entspricht, um das die Verdrängerscherenpaare (86, 88) gespreizt werden.

3. Verfahren nach Anspruch 1 oder 2, **dadurch gekennzeichnet, daß** zunächst eine Überlänge des Fadens (66) von einem Fadenspender (10) vorgegeben wird, welche dann nach dem Befüllen und vor dem Einschnüren von dem Fadenspender (10) auf die erste gewünschte Fadenlänge verkürzt wird.

4. Fadenspender für eine Vorrichtung zum Herstellen von Würsten, deren beide Enden jeweils durch einen Faden miteinander verbunden sind, **dadurch gekennzeichnet, daß** der Fadenspender (10) zwei getrennt ansteuerbare Freigabeeinrichtungen (14, 16) für jeweils eine einstellbare Fadenlänge aufweist.

5. Fadenspender nach Anspruch 4, **dadurch gekennzeichnet, daß** die Freigabeeinrichtungen (14, 16) über eine Freilaufkupplung (32) auf einen Fadenförderer (12) wirkt.

6. Fadenspender nach Anspruch 5, **dadurch gekennzeichnet, daß** der Fadenförderer (12) zwei Zahnräder (22, 24) aufweist, zwischen denen der Faden (66) geführt ist.

7. Fadenspender nach Anspruch 6, **dadurch gekennzeichnet, daß** eines der Zahnräder (24) mit der Freilaufkupplung (32) verbunden ist.

8. Fadenspender nach einem der Ansprüche 4 bis 7, **dadurch gekennzeichnet, daß** die Freigabeeinrichtungen (14, 16) jeweils einen Linearantrieb mit einstellbarem Hub aufweisen.

9. Fadenspender nach Anspruch 8, **dadurch gekennzeichnet, daß** die Linearantriebe jeweils einen Pneumatikzylinder (40, 42) mit Kolben (44), 46) und Kolbenstange (48, 50) mit einstellbarer mechanischer Hubbegrenzung aufweisen.

10. Fadenspender nach Anspruch 9, **dadurch gekennzeichnet, daß** die mechanischen Hubbegrenzungen je eine verstellbare Schraube (52, 54) aufweisen, die koaxial zur jeweiligen Kolbenstange (48, 50) so angeordnet ist, daß sie den Weg der jeweiligen Kolbenstange (48, 50) begrenzen kann.

11. Fadenspender nach einem der Ansprüche 8 bis 10, **dadurch gekennzeichnet, daß** er eine Gabeltraverse (34) aufweist, die mittig zwischen ihren beiden Gabelöffnungen drehbar gelagert ist und mit beiden Linearantrieben über Gleitsteine (36, 38) in den Gabelöffnungen verbunden ist.

12. Fadenspender nach einem der Ansprüche 4 bis 11, **dadurch gekennzeichnet, daß** er eine Fadenrückzieheinrichtung (18) aufweist.

13. Fadenspender nach Anspruch 12, **dadurch gekennzeichnet, daß** die Fadenrückzieheinrichtung (18) eine Kufe (26) aufweist, die mittels eines Antriebs zwischen zwei Positionen hin- und herbewegbar ist.

14. Fadenspender nach Anspruch 13, **dadurch gekennzeichnet, daß** der Antrieb ein pneumatischer Linearantrieb ist.

## Claims

1. A method for producing sausages, the two ends of which are joined together in each case by a string drawn off from a string store, in which
- the string (66) is first fastened to a first closed end of the sausage,
- then a first given string length is released and the sausage is filled,
- then the second end of the sausage together with the string (66) is gripped by two pairs of separators (86, 88) and is tied off, and
- then the two pairs of separators (86, 88) are spread apart so that a tail section free of filling is produced in which the sausage is finally closed, **characterised in that** after tying-off and before the two pairs of separators (86, 88) are moved apart a second given string length is released.

2. A method according to Claim 1, **characterised in that** the second string length corresponds approximately to the amount by which the pairs of separators (86, 88) are moved apart.

3. A method according to Claim 1 or 2, **characterised in that** first an excess length of the string (66) is preset by a string dispenser (10), which length is then shortened to the first desired string length after filling and before tying off by the string dispenser (10).

4. A string dispenser for an apparatus for producing sausages, the two ends of which are joined together in each case by a string, **characterised in that** the string dispenser (10) has two separately controllable release means (14, 16) for one adjustable string length in each case.

5. A string dispenser according to Claim 4, **characterised in that** the release means (14, 16) act on a string conveyor (12) via a overrunning clutch (32).

6. A string dispenser according to Claim 5, **characterised in that** the string conveyor (12) has two toothed wheels (22, 24) between which the string (66) is guided.

7. A string dispenser according to Claim 6, **characterised in that** one of the toothed wheels (24) is connected to the overrunning clutch (32).

8. A string dispenser according to one of Claims 4 to 7, **characterised in that** the release means (14, 16) each comprise a linear drive with adjustable stroke.

9. A string dispenser according to Claim 8, **characterised in that** the linear drives each have a pneumatic cylinder (40, 42) with piston (44, 46) and piston rod (48, 50) with adjustable mechanical stroke limiting means.

10. A string dispenser according to Claim 9, **characterised in that** the mechanical stroke limiting means each have an adjustable screw (52, 54) which is arranged coaxially to the respective piston rod (48, 50) such that it can limit the path of the respective piston rod (48, 50).

11. A string dispenser according to one of Claims 8 to 10, **characterised in that** it has a fork cross member (34) which is rotationally mounted centrally between its two fork openings and is connected to both linear drives via sliding blocks (36, 38) in the fork openings.

12. A string dispenser according to one of Claims 4 to 11, **characterised in that** it has a string retraction means (18).

13. A string dispenser according to Claim 12, **characterised in that** the string retraction means (18) has a rocker (26) which can be moved back and forth between two positions by means of a drive.

14. A string dispenser according to Claim 13, **characterised in that** the drive is a pneumatic linear drive.

## Revendications

1. Procédé pour la fabrication de saucisses dont les deux extrémités sont liées ensemble par une ficelle tirée d'une réserve de ficelle, dans lequel
- on fixe d'abord la ficelle (66) à une première extrémité de saucisse fermée,
- on relâche ensuite une première longueur de ficelle déterminée et on remplit la saucisse,
- puis la deuxième extrémité de saucisse est saisie et serrée conjointement à la ficelle (66) par deux paires de ciseaux presseurs (86, 88), et
- on écarte alors les deux paires de ciseaux presseurs (86, 88) de manière à former un tronçon de tresse sans chair à saucisse dans lequel la saucisse est finalement fermée,
**caractérisé par le fait que**, après le serrage et avant l'écartement des deux paires de ciseaux presseurs (86, 88), on relâche une deuxième longueur de ficelle déterminée.

2. Procédé selon la revendication 1, **caractérisé par le fait que** la deuxième longueur de ficelle correspond approximativement à la dimension de l'écartement des paires de ciseaux presseurs (86, 88).

3. Procédé selon la revendication 1 ou 2, **caractérisé par le fait qu'**un supplément de longueur de la ficelle (66) est d'abord prescrit par un distributeur de ficelle (10) et qu'il est ensuite réduit à la première longueur de ficelle souhaitée, après le remplissage et avant le serrage, par le distributeur de ficelle (10).

4. Distributeur de ficelle destiné à un dispositif pour la fabrication de saucisses dont les deux extrémités sont liées ensemble par une ficelle tirée d'une réserve de ficelle, **caractérisé par le fait que** le distributeur de ficelle (10) comporte deux dispositifs de relâchement (14, 16) commandables séparément pour à chaque fois une longueur de ficelle réglable.

5. Distributeur de ficelle selon la revendication 4, **caractérisé par le fait que** les dispositifs de relâchement (14, 16) agissent par l'intermédiaire d'un couplage à roue libre (32) sur un transporteur de ficelle (12).

6. Distributeur de ficelle selon la revendication 5, **caractérisé par le fait que** le transporteur de ficelle (12) comporte deux roues dentées (22, 24) entre lesquelles la ficelle (66) est guidée.

7. Distributeur de ficelle selon la revendication 6, **caractérisé par le fait que** l'une des roues dentées (24) est reliée au couplage à roue libre (32).

8. Distributeur de ficelle selon l'une des revendications 4 à 7, **caractérisé par le fait que** les dispositifs de relâchement (14, 16) comportent chacun un dispositif d'entraînement linéaire avec course réglable.

9. Distributeur de ficelle selon la revendication 8, **caractérisé par le fait que** les dispositifs d'entraînement linéaire comportent chacun un vérin pneumatique (40, 42) avec piston (44, 46) et tige de piston (48, 50) avec limitation de course mécanique réglable.

10. Distributeur de ficelle selon la revendication 9, **caractérisé par le fait que** les limitations de course mécaniques comportent chacune une vis réglable (52, 54) qui est disposée coaxiale à la tige de piston respective (48, 50) de telle sorte qu'elle peut limiter la course de la tige de piston respective (48, 50).

11. Distributeur de ficelle selon l'une des revendications 8 à 10, **caractérisé par le fait qu'**il comporte une traverse fourchue (34) qui est montée de façon à pouvoir tourner au milieu entre ses deux ouvertures de fourche et qui est reliée aux deux dispositifs d'entraînement linéaire par l'intermédiaire de coulisseaux (36, 38) dans les ouvertures de fourche.

12. Distributeur de ficelle selon l'une des revendications 4 à 11, **caractérisé par le fait qu'**il comporte un dispositif de retrait de ficelle (18).

13. Distributeur de ficelle salon la revendication 12, **caractérisé par le fait que** le dispositif de retrait (18) comporte une bascule (26) qui peut être déplacée en va-et-vient entre deux positions au moyen d'un dispositif d'entraînement.

14. Distributeur de ficelle selon la revendication 13, **caractérisé par le fait que** le dispositif d'entraînement est un dispositif d'entraînement linéaire pneumatique.
